# EUROPEAN PATENT SPECIFICATION

(11) **EP 2 048 113 B1**
(45) Date of publication and mention of the grant of the patent: **26.02.2014**
(21) Application number: 07791720.1
(22) Date of filing: 25.07.2007
(51) Int. Cl.: C01B 31/02, B01J 21/18, B01J 32/00, H01M 4/96, B82Y 30/00, B82Y 40/00, H01M 4/90, H01M 4/92

(54) **CARBON NANOWALL WITH CONTROLLED STRUCTURE AND METHOD FOR CONTROLLING CARBON NANOWALL STRUCTURE**
KOHLENSTOFFNANOWAND MIT GESTEUERTER STRUKTUR UND VERFAHREN ZUR STEUERUNG DER STRUKTUR VON KOHLENSTOFFNANOWÄNDEN
NANOPAROI DE CARBONE À STRUCTURE CONTRÔLÉE ET PROCÉDÉ DE CONTRÔLE DE LA STRUCTURE D'UNE NANOPAROI DE CARBONE

(30) Priority: 25.07.2006 JP 2006201927
(43) Date of publication of application: 15.04.2009
(73) Proprietor: TOYOTA JIDOSHA KABUSHIKI KAISHA, Toyota-shi, Aichi-ken, 471-8571 (JP)
(72) Inventor: HORI, Masaru, Nisshin-shi Aichi 470-0117 (JP); HIRAMATSU, Mineo, Aichi-gun Aichi 470-0162 (JP); KANO, Hiroyuki, Nishikamo-gun Aichi 470-0201 (JP); SUGIYAMA, Toru, Toyota-shi Aichi-ken 471-8571 (JP); HAMA, Yuichiro, Toyota-shi Aichi-ken 471-8571 (JP)
(74) Representative: Kuhnen & Wacker
(86) International application number: PCT/JP2007/065036
(87) International publication number: WO 2008/013309

(56) References cited:
- EP-A- 1 661 855
- WO-A1-2005/021430
- JP-A- 2005 097 113
- HIRAMATSU M ET AL: "Fabrication of vertically aligned carbon nanowalls using capacitively coupled plasma-enhanced chemical vapor deposition assisted by hydrogen radical injection" APPLIED PHYSICS LETTERS, AIP, AMERICAN INSTITUTE OF PHYSICS, MELVILLE, NY, US, vol. 84, no. 23, 7 June 2004 (2004-06-07), pages 4708-4710, XP012061712 ISSN: 0003-6951
- HIRAMATSU M ET AL: "Fabrication of carbon nanowals using RF plasma CVD" SPSM ABSTRACTS OF PAPERS, XX, XX, 4 June 2003 (2003-06-04), page 20, XP002985782
- KURITA S. ET AL.: 'Raman spectra of carbon nanowalls grown by plasma-enhanced chemical vapor deposition' JOURNAL OF APPLIED PHYSICS vol. 97, no. 10, 2005, pages 104320-1 - 104320-5, XP003020846
- SATO G. ET AL.: 'Fast Growth of Carbon Nanowalls from pure Methane using Helicon Plasma-Enhanced Chemical vapor Deposition' JAPANESE JOURNAL OF APPLIED PHYSICS vol. 45, no. 6A, 15 June 2006, pages 5210 - 5212, XP003020847
- HIRAMATSU M. ET AL.: 'Plasma CVD o Mochiita Carbon Nanowall no Seicho' JOURNAL OF THE JAPANESE ASSOCIATION OF CRYSTAL GROWTH vol. 32, no. 5, 2005, pages 371 - 376, XP003020848

## Description

### Technical Field

The present invention relates to a method for controlling a carbon nanowall structure, and to a novel carbon nanowall , and to a catalyst layer for a fuel cell.

### Background Art

Known examples of carbonaceous porous materials having a nano-size structure include graphite and amorphous, such as fullerene, carbon nanotubes, carbon nanohorns, and carbon nanoflakes.

Among carbonaceous porous materials having a nano-size structure, carbon nanowalls (CNW) are a two-dimensional carbon nanostructure which typically have a wall-like structure in which the walls rise upwards from the surface of a substrate in a substantially uniform direction. Fullerene (such as C60) is a zero-dimensional carbon nanostructure. Carbon nanotubes can be considered to be a one-dimensional carbon nanostructure. Carbon nanoflakes are an aggregate of planar, two-dimensional, small pieces similar to carbon nanowalls. Like rose petals, the individual small pieces are not connected to each other so that their carbon nanostructure has an inferior directionality with respect to the substrate to that of carbon nanowalls. Thus, carbon nanowalls have a carbon nanostructure with totally different characteristics from fullerene, carbon nanotubes, carbon nanohoms, and carbon nanoflakes.

The present inventors have already disclosed a production method and production apparatus focusing on carbon nanowalls in JP Patent Publication (Kokai) No. 2005-97113A. Specifically, as illustrated in Figure 7, a source gas 32 containing at least carbon as a constituent element is introduced into a reaction chamber 10. The reaction chamber 10 is provided with a parallel plate capacitively coupled plasma (CCP) generating mechanism 20 which includes a first electrode 22 and a second electrode 24. In this way, electromagnetic waves such as RF waves are irradiated to form a plasma atmosphere 34 in which the source gas 32 has been turned into plasma. On the other hand, in a radical generating chamber 41 provided externally to the reaction chamber 10, a radical source gas 36 containing at least hydrogen is decomposed by RF waves or the like to generate hydrogen radicals 38. The hydrogen radicals 38 are injected into the plasma atmosphere 34, and carbon nanowalls form on the surface of a substrate 15 arranged on the second electrode 24.
Further documents relate to carbon nanowalls. As such, the EP 1 661 855 A1 relates to carbon nanowalls and a method for producing the same.

### Disclosure of the Invention

Although the existence of carbon nanowalls (CNW) and several basic production methods thereof are known, a method for controlling a structure so as to produce the optimum shape and physical properties of a carbon nanowall (CNW) according to its use and application has until now been unclear.

Accordingly, it is an object of the present invention to provide a method for controlling a carbon nanowall (CNW) structure having improved corrosion resistance against high potential by varying the spacing between the carbon nanowall walls so that its surface area and crystallinity are controlled; and to provide a carbon nanowall (CNW) with a high surface area and a carbon nanowall (CNW) with a high crystallinity both of which have a controlled structure.

The present inventors discovered that by varying the ratio between the introduction rates of process gases in the carbon nanowall (CNW) production process by plasma CVD, the spacing between the carbon nanowall (CNW) walls can be varied, which allows the structure, such as surface area and crystallinity, of the carbon nanowall to be controlled, thereby arriving at the present invention.

The first aspect of the invention relates to a carbon nanowall according to claim 1.

Specifically, first, the present invention is an invention of a carbon nanowall having a controlled structure, such as shape and physical properties, as in the following (1) to (2).
(1) A high-surface-area carbon nanowall having a wall surface area of 50 cm²/cm²-substrate·µm or more. (Here, "wall surface area" is the wall surface area per unit substrate surface area per unit wall height.) For example, when the carbon nanowall is used as an electrode catalyst carrier for a fuel cell, it is preferred to have a larger surface area as the amount of supported catalyst increases. A carbon nanowall having a wall surface area of 50 cm²/cm²-substrate·µm or more is preferable, a carbon nanowall having a wall surface area of 60 cm²/cm²-substrate·µm or more is more preferable, and a carbon nanowall having a wall surface area of 70 cm²/cm²-substrate·µm or more is even more preferable.
(2) A crystallinity such that the D band half value width in the Raman spectrum measured with an irradiation laser wavelength of 514.5 nm is 85 cm⁻¹ or less. For example, when using the carbon nanowall as an electronic material for which emphasis is placed on the magnitude of conductivity, higher crystallinity provides higher conductivity and superior corrosion resistance against high potential. Therefore, a carbon nanowall having a crystallinity such that the D band half value width in the Raman spectrum is 85 cm⁻¹ or less is preferable, a carbon nanowall having a crystallinity such that the D band half value width in the Raman spectrum is 65 cm⁻¹ or less is more preferable, and a carbon nanowall having a crystallinity such that the D band half value width in the Raman spectrum is 50 cm⁻¹ or less is even more preferable.

This carbon nanowall has an increased amount of supported catalyst because of its large surface area, and has high conductivity and excellent corrosion resistance against high potential because of its high crystallinity, and is thus especially suitable as an electrode catalyst carrier for a fuel cell.

Second, the present invention is an invention of a method for controlling a carbon nanowall structure according to claim 2, which carbon nanowall structure has a controlled structural shape and physical properties such as surface area and crystallinity, wherein, in a method for producing a carbon nanowall by forming in at least a part of a reaction chamber a plasma atmosphere in which a carbon source gas having at least carbon as a constituent element has been turned into plasma, injecting into the plasma atmosphere hydrogen radicals generated externally to the atmosphere from H₂ gas, and forming a carbon nanowall on a surface of a substrate provided in the reaction chamber by reacting the plasma and the hydrogen radicals, a ratio between introduction rates of the H₂ gas and the carbon source gas as a design factor controls the surface area and/or crystallinity of the produced carbon nanowall.

It is noted that the absolute value of the wall surface area is determined by the ratio between the introduction rates of the H₂ gas and the carbon source gas (H₂ gas introduction rate (mol)/carbon source gas introduction rate (mol)), which is a design factor in the present invention, as well as by the values of other design factors. However, in the present specification, the ratio between the introduction rates is discussed with a substrate temperature of 970°C, chamber internal pressure of 800 mTorr, substrate material made of silicon, and a plasma generating source power of 13.56 MHz and 100 W as such other design factors.

Here, the design factor which is the ratio between the introduction rates of the H₂ gas and the carbon source gas (H₂ gas introduction rate (mol)/carbon source gas introduction rate (mol) can be varied over a broad range according to the shape and physical properties, such as surface area and crystallinity, of the desired carbon nanowall. The ratio between the introduction rates of the H₂ gas and the carbon source gas (H₂ gas introduction rate (mol)/carbon source gas introduction rate (mol)) can be varied between 0.5, and 1.8.

Specifically, by setting the ratio between the introduction rates of the H₂ gas and the carbon source gas (H₂ gas introduction rate (mol)/carbon source gas introduction rate (mol)) to the claimed range, a carbon nanowall can be formed having a wall surface area of 50 cm²/cm²-substrate·µm or more. By setting the ratio between the introduction rates of the H₂ gas and the carbon source gas (H₂ gas introduction rate (mol)/carbon source gas introduction rate (mol)) to 1.4 or less, a carbon nanowall can be formed having a surface area of 60 cm²/cm²-substrate·µm or more, and by setting the ratio between the introduction rates of the H₂ gas and the carbon source gas (H₂ gas introduction rate (mol)/carbon source gas introduction rate (mol)) to 1.0 or less, a carbon nanowall can be formed having a surface area of 70 cm²/cm²-substrate·µm or more.

Further, by setting the H₂ gas introduction rate at a 2.5 sccm/cm²-parallel plate electrode surface area or more, a carbon nanowall can be formed having a crystallinity such that the D band half value width in the Raman spectrum is 85 cm⁻¹ or less; by setting the H₂ gas introduction rate to a 4.2 sccm/cm²-parallel plate electrode surface area or more, a carbon nanowall can be formed having a crystallinity such that the D band half value width in the Raman spectrum is 65 cm⁻¹ or less, and by setting the H₂ gas introduction rate to 5.8 sccm/cm²-parallel plate electrode surface area or more, a carbon nanowall can be formed having a crystallinity such that the D band half value width in the Raman spectrum is 50 cm⁻¹ or less.

In the present invention, examples of methods for generating the hydrogen radicals from the H₂ gas include irradiating one or more selected from microwaves, UHF waves, VHF waves, and RF waves on the H₂ gas, and causing the H₂ gas to come into contact with a heated catalyst metal.

In the present invention, examples of the starting material for the carbon source gas include compounds having at least carbon and hydrogen as constituent elements and compounds having at least carbon and fluorine as constituent elements.

Third, the present invention is a catalyst layer for a fuel cell according to claim 7, characterized in that a carrier for the catalyst layer is the above-described carbon nanowall having a controlled structure, and that a catalyst component and/or electrolyte component is supported/dispersed on the carrier for the catalyst layer composed of the carbon nanowall. By using a carbon nanowall having both a high surface area and high crystallinity as the electrode catalyst carrier for a fuel cell, such an electrode catalyst carrier has an increased amount of supported catalyst because of the large surface area of the carbon nanowall, and has high conductivity and excellent corrosion resistance against high potential because of the high crystallinity of the carbon nanowall, and is thus especially suitable as an electrode catalyst carrier for a fuel cell.

By varying the ratio between the introduction rates of the process gases in a carbon nanowall (CNW) production process by plasma CVD, the spacing between the carbon nanowall (CNW) walls can be varied, which allows the surface area and crystallinity to be controlled. The carbon nanowall according to the present invention has an increased amount of supported catalyst because of its large surface area, as well as high conductivity and excellent corrosion resistance against high potential because of its high crystallinity, and is thus especially suitable as an electrode catalyst carrier for a fuel cell.

### Brief Description of the Drawings

Figure 1 illustrates a schematic view of one example of an apparatus for forming a carbon nanowall having a controlled structure according to the present invention.
Figure 2 illustrates a schematic view of an apparatus for forming the carbon nanowall used in the examples.
Figure 3 illustrates the relationship between the ratio between the introduction rates of the hydrogen gas (H₂) and the carbon source gas (C₂F₆) and the wall surface area of the grown carbon nanowall.
Figure 4 shows a surface SEM photographic image of a carbon nanowall when H₂ introduction rate/C₂F₆ introduction rate = 2. (not according to the invention)
Figure 5 shows a surface SEM photographic image of a carbon nanowall when H₂ introduction rate/C₂F₆ introduction rate = 1.
Figure 6 illustrates the relationship between the hydrogen gas (H₂) introduction rate and the crystallinity of the carbon nanowall as determined from Raman spectroscopy.

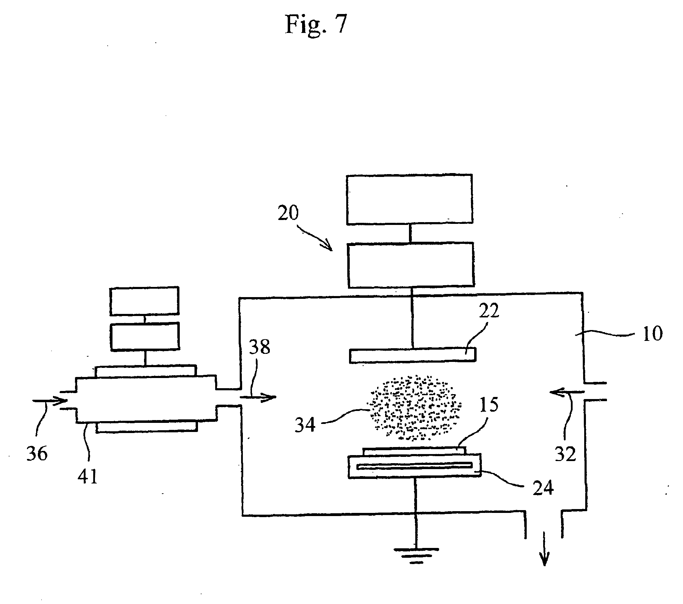

Figure 7 illustrates one example of a carbon nanowall control apparatus.

The reference numerals in the drawings are as follows:
- 1: Plasma CVD apparatus
- 2: Silicon (Si substrate
- 3: Heater inside the chamber
- 4: Plate electrode parallel to the substrate 2
- 5: Carbon source gas inlet tube
- 6: hydrogen gas (H₂) inlet tube
- 7: Plasma generating source
- 8: Inductive plasma generating source
- 9: High frequency power apparatus
- 10: Reaction chamber
- 15: Carbon source gas inlet tube
- 20: Plasma discharge means
- 22: First electrode
- 24: Second electrode
- 32: Source gas (raw material)
- 34: Plasma atmosphere
- 36: Radical source gas (radical source material)
- 38: Radical
- 41: Radical generating chamber

### Best Mode for Carrying Out the Invention

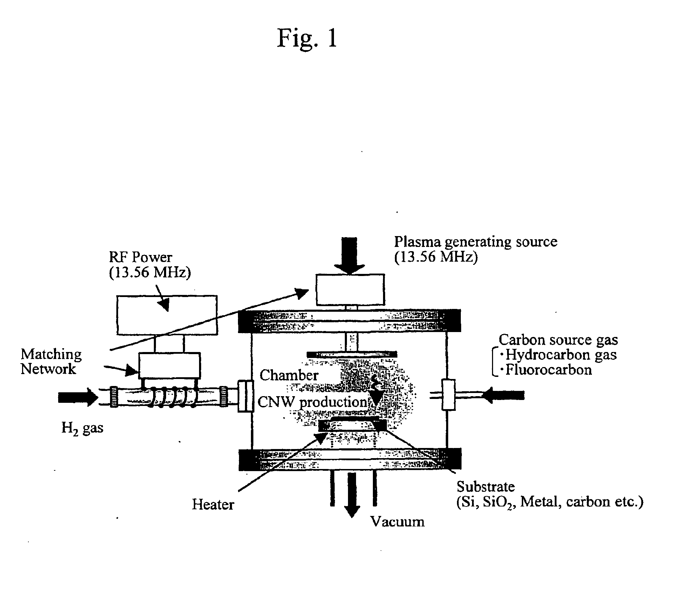

Figure 1 illustrates a schematic view of one example of an apparatus for forming a carbon nanowall having a controlled structure according to the present invention. Hydrogen radicals as well as a reaction gas (carbon source gas) containing carbon, such as CF₄, C₂F₆, or CH₄, are introduced between parallel plate electrodes in the chamber illustrated in Figure 1. A carbon nanowall is then formed by PECVD (plasma enhanced chemical vapor deposition). At this stage, the substrate may be heated to approximately 500°C or more. The distance between the parallel plate electrodes is about 5 cm. Between the plate electrodes, a capacitively coupled plasma is generated using a 13.56 MHz high frequency power apparatus with a power of 100 W. The hydrogen radical generation site is a quartz tube with a length of 200 mm and an internal diameter [ϕ] of 26 mm. H₂ gas is introduced into the quartz tube to produce an inductively coupled plasma using a 13.56 MHz high frequency power apparatus with a power of 400 W. The flow rate of the carbon source gas and the H₂ gas may be appropriately varied. The chamber internal pressure is, for example, 100 mTorr. However, this apparatus is merely one example, and the above description is not to be taken as limiting the experimental conditions, equipment, or the results.

### Example 1

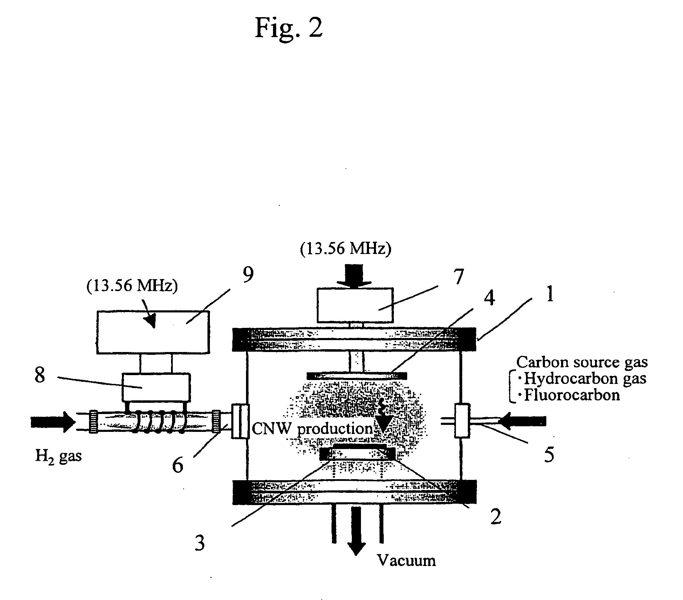

Using the plasma CVD apparatus 1 illustrated in Figure 2, a substrate 2 formed by silicon (Si) was placed on a heater 3 inside the chamber. The carbon source gas (C₂F₆) was introduced from an inlet tube 5 and hydrogen gas (H₂) was introduced from a separate inlet tube 6 between a plate electrode 4 and the substrate 2 which are parallel to each other. At this stage, the temperature of the heater was set to 970°C.

Capacitively coupled plasma was generated between the plate electrode 4 and the substrate 2 with the distance between the plate electrode 4 and the substrate 2 set to 5 cm and the output power of the plasma generating source 7 set at 13.56 MHz and 100 W. Further, inductively coupled plasma was generated in the inlet tube 6 by an inductive plasma generating source 8. The power of the high frequency power apparatus 9 at this stage was 13.56 MHz and 400 W. The surface area of the parallel plate electrode was 19.625 cm² (ϕ 50).

A CNW was grown on the substrate 2 by a plasma CVD method under the above conditions. The growing was carried out with a carbon source gas flow rate of 50 sccm, and a hydrogen gas flow rate divided into 4 levels of 50 (H₂ gas introduction rate (mol)/carbon source gas introduction rate (mol) = 1), 70 (H₂ gas introduction rate (mol)/carbon source gas introduction rate (mol) = 1.4), 100 (H₂ gas introduction rate (mol)/carbon source gas introduction rate (mol) = 2), and 125 sccm (H₂ gas introduction rate (mol)/carbon source gas introduction rate (mol) = 2.5).

At this stage, the pressure in the chamber was set to 800 mTorr. Carbon nanowalls grown for 30 minutes in this system had a height of about 300 to 750 nm, and a wall thickness of 10 to 50 nm.

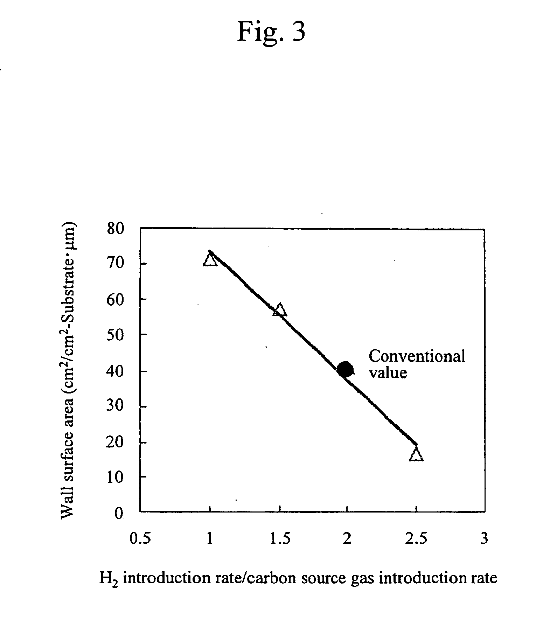

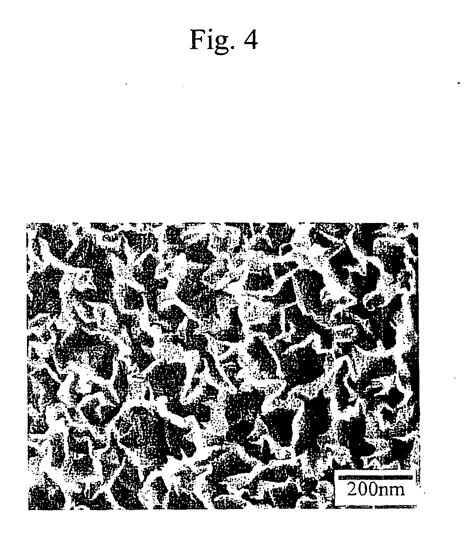

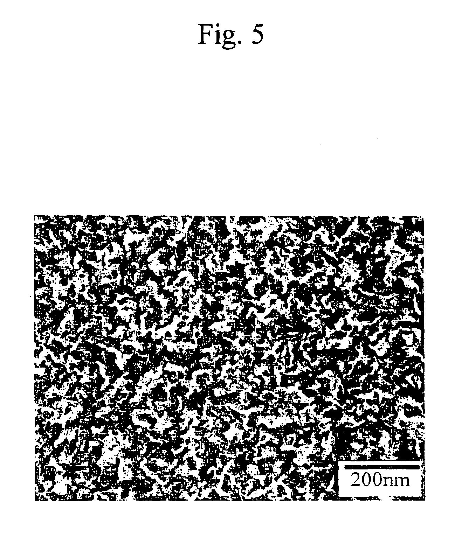

Figure 3 illustrates the relationship between the ratio between the introduction rates of the hydrogen gas (H₂) and the carbon source gas (C₂F₆) and the wall surface area of the grown carbon nanowall. Figure 4 shows a surface SEM photographic image of a carbon nanowall when H₂ introduction rate/C₂F₆ introduction rate = 2. Figure 5 shows a surface SEM photographic image of a carbon nanowall when H₂ introduction rate/C₂F₆ introduction rate = 1.

From the results of Figures 3 to 5, it can be seen that as the ratio between the introduction rates of the hydrogen gas and the carbon source gas (H₂ gas introduction rate (mol)/carbon source gas introduction rate (mol)) decreases, wall spacing is decreased and surface area is increased.

### Example 2

The fact that crystallinity could also be independently controlled was verified using the same CVD process as that of Example 1 while varying the introduction rate of H₂ gas.

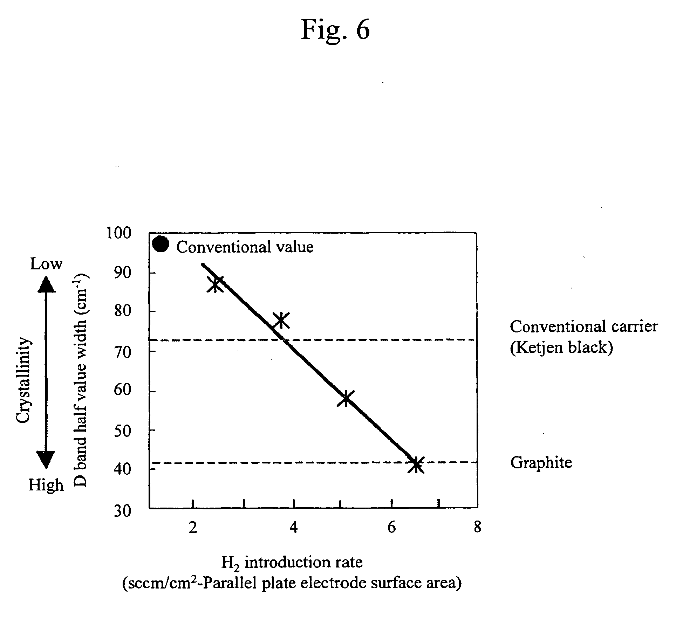

Figure 6 illustrates the relationship between the hydrogen gas (H₂) introduction rate and the crystallinity of the carbon nanowall as determined from Raman spectroscopy. The degree of crystallinity was approximated by using as an index the D band half value width in the Raman spectrum measured with an irradiation laser wavelength of 514.5 nm. Crystallinity increases as D band half value width decreases. Specifically, by decreasing the H₂ introduction rate, the crystallinity of the carbon nanowall can be increased. In Figure 6, for reference the D band half value width of the conventional carrier Ketjen black and the D band half value width of graphite were also added. It can be seen that even a carbon nanowall can be made to have a high crystallinity equal to or higher than that of Ketjen black.

### Industrial Applicability

The carbon nanowall according to the present invention has an increased amount of supported catalyst because of its large surface area, and has high conductivity and excellent corrosion resistance against high potential because of its high crystallinity. This carbon nanowall is thus especially suitable as an electrode catalyst carrier for a fuel cell. Accordingly, this carbon nanowall will contribute to the practical use and spread of fuel cells.

## Claims

1. A carbon nanowall, **characterized by** having a wall surface area of 50 cm²/cm²-substrate·µm or more and by having a crystallinity such that the D band half value width in the Raman spectrum measured with an irradiation laser wavelength of 514.5 nm is 85 cm⁻¹ or less.

2. A method for controlling a carbon nanowall structure according to claim 1, wherein a method for producing a carbon nanowall by forming in at least a part of a reaction chamber a plasma atmosphere in which a carbon source gas having at least carbon as a constituent element has been turned into plasma, injecting into the plasma atmosphere hydrogen radicals generated externally to the atmosphere from H₂ gas, and forming a carbon nanowall on a surface of a substrate provided in the reaction chamber by reacting the plasma and the hydrogen radicals, wherein a ratio between introduction rates of the H₂ gas and the carbon source gas is in a range between 0.5 and 1.8 and **characterized in that** the H₂ gas introduction rate is set at 2.5 sccm/cm²-parallel plate electrode surface area or more as design factors which control the surface area and crystallinity of the produced carbon nanowall according to claim 1.

3. The method for controlling a carbon nanowall structure according to claim 2, **characterized by** generating the hydrogen radicals from the H₂ gas by irradiating one or more selected from microwaves, UHF waves, VHF waves, and RF waves on the H₂ gas, and/or causing the H₂ gas to come into contact with a heated catalyst metal.

4. The method for controlling a carbon nanowall structure according to claim 2 or 3, **characterized in that** the carbon source gas has at least carbon and hydrogen as constituent elements.

5. The method for controlling carbon nanowall structure according to claim 2 or 3, **characterized in that** the carbon source gas has at least carbon and fluorine as constituent elements.

6. A catalyst layer for a fuel cell, **characterized in that** a carrier for the catalyst layer is the carbon nanowall according to claim 1 and that a catalyst component and/or electrolyte component is supported/dispersed on the carrier for the catalyst layer composed of the carbon nanowall.

## Patentansprüche

1. Kohlenstoffnanowand, **dadurch gekennzeichnet, dass** sie eine Wandoberflächenfläche von 50 cm²/cm²-Substrat·µm oder mehr aufweist und dadurch, dass sie eine solche Kristallinität aufweist, dass die D-Band Halbwertsbreite im Raman-Spektrum, das mit einer Bestrahlungslaserwellenlänge von 514,5 nm gemessen wird, 85 cm⁻¹ oder weniger beträgt.

2. Verfahren zum Steuern einer Kohlenstoffnanowandstruktur nach Anspruch 1, wobei ein Verfahren zum Herstellen einer Kohlenstoffnanowand durch Bilden einer Plasma-Atmosphäre in mindestens einem Teil einer Reaktionskammer, in der ein Kohlenstoff-Ausgangsgas, das mindestens Kohlenstoff als Bestandteil enthält, in ein Plasma umgewandelt wurde, durch in die Plasma-Atmosphäre Einspritzen von außerhalb der Atmosphäre aus H₂-Gas gebildeten Wasserstoffradikalen, und durch Bilden einer Kohlenstoffnanowand an einer Oberfläche eines Substrates, dass in der Reaktionskammer bereitgestellt wird, durch Umsetzung des Plasmas mit den Wasserstoffradikalen, wobei das Verhältnis der Einbringungsraten des H₂-Gases und des Kohlenstoff-Ausgangsgas in einem Bereich von 0,5 bis 1,8 liegt, und **dadurch gekennzeichnet, dass** die H₂-Gas-Einbringungsrate auf 2,5 sccm/cm²-Parallelplattenelektrodenoberflächenfläche oder mehr eingestellt ist, als Gestaltungsfaktoren, welche die Oberflächenfläche und Kristallinität der hergestellten Kohlenstoffnanowand nach Anspruch 1 steuern.

3. Verfahren zum Steuern der Kohlenstoffnanowandstruktur nach Anspruch 2, **dadurch gekennzeichnet, dass** die Wasserstoffradikale aus dem H₂-Gas durch Einstrahlen von einem oder mehrerer ausgewählt aus Ultrahochfrequenzwellen, Ultrakurzwellen, und Kurzwellen, auf das H₂-Gas erzeugt werden und/oder dadurch, dass das H₂-Gas mit einem erhitzten Katalysatormaterial in Kontakt gebracht wird.

4. Verfahren zum Steuern der Kohlenstoffnanowandstruktur nach Anspruch 2 oder 3, **dadurch gekennzeichnet, dass** das Kohlenstoff-Ausgangsgas mindestens Kohlenstoff und Wasserstoff als Bestandteile aufweist.

5. Verfahren zum Steuern der Kohlenstoffnanowandstruktur nach Anspruch 2 oder 3, **dadurch gekennzeichnet, dass** das Kohlenstoff-Ausgangsgas mindestens Kohlenstoff und Fluor als Bestandteile aufweist.

6. Katalysatorschicht für eine Brennstoffzelle, **dadurch gekennzeichnet, dass** ein Träger für die Katalysatorschicht die Kohlenstoffnanowand nach Anspruch 1 ist, und dass eine Katalysatoranteil und/oder ein Elektrolytanteil auf dem Träger für die Katalysatorschicht, der aus der Kohlenstoffnanowand besteht, geträgert/verteilt ist.

## Revendications

1. Nanoparoi de carbone, **caractérisé en ce qu'**elle possède une surface de paroi de 50 cm²/cm² de substrat µm ou plus et **en ce qu'**elle possède une cristallinité telle que la largeur à mi-hauteur de la bande D sur le spectre Raman mesuré avec une longueur d'onde de laser d'irradiation de 514,5 nm est inférieure ou égale à 85 cm⁻¹.

2. Procédé de contrôle de la structure d'une nanoparoi de carbone selon la revendication 1, dans lequel un procédé de production d'une nanoparoi de carbone par la formation dans au moins une partie d'une chambre réactionnelle d'une atmosphère de plasma dans laquelle un gaz source de carbone contenant au moins du carbone comme élément constitutif a été transformé en plasma, l'injection dans l'atmosphère de plasma de radicaux hydrogène générés à l'extérieur de l'atmosphère à partir de H₂ gazeux et la formation d'une nanoparoi de carbone sur une surface d'un substrat disposé dans la chambre réactionnelle en faisant réagir le plasma et les radicaux hydrogène, dans lequel le rapport entre les débits d'introduction du H₂ gazeux et du gaz source de carbone est situé entre 0,5 et 1,8 et **caractérisé en ce que** le débit d'introduction du H₂ gazeux est fixé à 2,5 sccm/cm² de surface d'électrode à plaques parallèles ou plus, en tant que facteurs de conception qui contrôlent la surface et la cristallinité de la nanoparoi de carbone produite selon la revendication 1.

3. Procédé de contrôle de la structure d'une nanoparoi de carbone selon la revendication 2, **caractérisé par** la génération des radicaux d'hydrogène à partir du H₂ gazeux par l'irradiation d'une ou de plusieurs ondes choisies parmi les micro-ondes, les ondes UHF, les ondes VHF et les ondes RF sur le H₂ gazeux et/ou le fait d'amener le H₂ gazeux à venir au contact d'un métal catalytique chauffé.

4. Procédé de contrôle de la structure d'une nanoparoi de carbone selon la revendication 2 ou 3, **caractérisé en ce que** le gaz source de carbone contient au moins du carbone et de l'hydrogène comme éléments constitutifs.

5. Procédé de contrôle de la structure d'une nanoparoi de carbone selon la revendication 2 ou 3, **caractérisé en ce que** le gaz source de carbone contient au moins du carbone et du fluor comme éléments constitutifs.

6. Couche catalytique pour pile à combustible, **caractérisée en ce qu'**un support pour couche catalytique est la nanoparoi de carbone selon la revendication 1 et **en ce qu'**un composant catalytique et/ou un composant d'électrolyte est supporté/dispersé sur le support de la couche catalytique composé de la nanoparoi de carbone.
